# EUROPÄISCHE PATENTSCHRIFT

(11) **EP 3 116 668 B1**
(45) Veröffentlichungstag und Bekanntmachung des Hinweises auf die Patenterteilung: **23.02.2022**
(21) Anmeldenummer: 15706468.4
(22) Anmeldetag: 24.02.2015
(51) Int. Cl.: B21D 43/05, B25J 15/00

(54) **VERFAHREN ZUM AUFBAU EINER WERKSTÜCKBEZOGENEN WERKSTÜCKGREIFEINRICHTUNG FÜR DIE PRESSENAUTOMATISIERUNG**
METHOD FOR CONSTRUCTION OF A WORKPIECE-RELATED WORKPIECE GRIPPING DEVICE FOR PRESS AUTOMATION
PROCÉDÉ DE CONSTRUCTION D'UN SYSTÈME DE PRÉHENSION SPÉCIFIQUE À UNE PIÈCE DESTINÉ À L'AUTOMATISATION D'UNE PRESSE

(30) Priorität: 10.03.2014 DE 102014204366
(43) Veröffentlichungstag der Anmeldung: 18.01.2017
(73) Patentinhaber: Bayerische Motoren Werke Aktiengesellschaft, 80809 München (DE)
(72) Erfinder: BUCHNER, Franz, 84180 Kronwieden (DE); HEILMEIER, Franz, 84168 Aham (DE); HUBER, Siegfried, 94428 Eichendorf (DE)
(86) Internationale Anmeldenummer: PCT/EP2015/053819
(87) Internationale Veröffentlichungsnummer: WO 2015/135746

(56) Entgegenhaltungen:
- WO-A1-2012/163390
- WO-A2-2013/120462
- JP-A- 2010 158 739

## Beschreibung

Die Erfindung betrifft ein Verfahren zum Aufbau einer Werkstückgreifeinrichtung für die Pressenautomatisierung. Die JP-A-2010158739, auf welche der Oberbegriff des Patentanspruchs 1 basiert, offenbart solch ein Verfahren.

Werkstückgreifeinrichtungen zur Pressenautomatisierung sind aus dem Stand der Technik bekannt. Eine Werkstückgreifeinrichtung betreffender Art weist einen einteilig oder mehrteilig ausgebildeten Träger auf, an dem wenigstens ein Greifmittel, (wie bspw. ein Vakuumsauger, ein Pneumatikspanner, ein Magnetgreifer oder dergleichen) angeordnet ist. Bei dem Träger kann es sich auch um eine aus mehreren Trägerrohren, Balken, Profilträgern und dergleichen gebildete Rahmenstruktur handeln. Zur Durchführung eines Werkstücktransports ist wenigstens eine Werkstückgreifeinrichtung mit Hilfe wenigstens einer Antriebseinrichtung (bspw. einem Roboter, einem Feeder, einem Crossbar-Feeder oder dergleichen) bewegbar. Zum allgemeinen Stand der Technik wird auf die Patentschriften DE 10 2010 035 983 B3, DE 10 2011 001 924 B4, EP 1 600 226 B1, EP 1 862 237 A1, EP 2 377 630 A1 und WO 2014/014172 A1 hingewiesen.

Aus dem Stand der Technik sind verschiedene Vorschläge bekannt, um den Aufbau einer Werkstückgreifeinrichtung zu vereinfachen. Die DE 100 64 974 A1 beschreibt eine Vorrichtung zur einfacheren Verbindung von Trägerrohren und ein modulares Greifersystem unter Anwendung dieser Vorrichtung. Die DE 101 23 661 A1 beschreibt einen Bauteilgreifer in Baukastenausführung. Auch die DE 197 51 502 A1 beschreibt einen Baukasten, sowie eine aus standardisierten Rohrelementen und Steckverbindungen aufgebaute Greif- und Transporthandhabe und ein Verfahren zum Aufbau und Justieren derselben.

Ein weitreichenderer Ansatz wird in der nächstliegenden DE 10 2010 053 401 A1 beschrieben. Um die Integration einer Pressenanlagen-Mechanisierung zum Handhaben von Blechwerkstücken (Förmlingen) in eine Pressenanlage zu vereinfachen und die Integrationszeit zu verringern, wird vorgeschlagen, die Mechanisierung entsprechend Konstruktionsvorgaben abseits der Pressenanlage aufzubauen und zur Einstellung und/oder Justierung, sowie zur Optimierung, die Bewegungsbahn durch Bewegungssimulation zu überprüfen.

Die Erfindung soll Möglichkeiten aufzeigen, wie der Aufbau und die Inbetriebnahme einer Werkstückgreifeinrichtung betreffender Art weitergehend vereinfacht werden kann.

Dies gelingt mit einem erfindungsgemäßen Verfahren mit den Merkmalen des Anspruchs 1.

Das erfindungsgemäße Verfahren zum Aufbau einer werkstückbezogenen Werkstückgreifeinrichtung für die Pressenautomatisierung, wobei werkstückspezifische Komponenten an einem Träger befestigt werden, sieht vor, dass die exakten Positionen und Ausrichtungen der am Träger zu befestigenden werkstückspezifischen Komponenten mit Hilfe eines Mehrachsroboters angezeigt werden.

Das erfindungsgemäße Verfahren dient somit dem mittels Mehrachsroboters automatisierten Aufbau einer werkstückbezogenen Werkstückgreifeinrichtung. Das Anzeigen der exakten Positionen und Ausrichtungen erfolgt automatisch, womit gemeint ist, dass der Mehrachsroboter nicht manuell bewegt bzw. gesteuert wird, sondern die entsprechende Position und Ausrichtung für eine am Träger zu befestigende Komponente durch selbsttätige Fahr- bzw. Stellbewegungen des Mehrachsroboters angezeigt wird.

Eine aufzubauende Werkstückgreifeinrichtung dient insbesondere dem Einlegen oder Entnehmen von Blechwerkstücken oder blech- bzw. schalenartigen Werkstücken (wie bspw. aus Kunststoff- oder Kunststoffverbund, z. B. CFK oder GFK, gebildete Werkstücke) an einer Pressenstation (oder dergleichen) oder innerhalb einer Pressenstraße. Selbsterklärend ist eine betreffende Werkstückgreifeinrichtung spezifisch bzw. individuell an das zu greifende Werkstück (oder gegebenenfalls auch an mehrere zu greifende Werkstücke) angepasst, was im Rahmen der Erfindung als werkstückbezogene Werkstückgreifeinrichtung bezeichnet wird. Werkstückspezifische bzw. werkstückindividuelle Komponenten sind insbesondere in ihrer Lage (Position und Ausrichtung) an die Geometrie des zu greifenden Werkstücks angepasste Greifmittel (wie bspw. Vakuumsauger, Pneumatikspanner, Magnetgreifer, Schaufeln oder dergleichen) und Sensoren.

Das erfindungsgemäße Verfahren läuft, zumindest hinsichtlich der Anzeige von Positionen und Ausrichtungen für die zu befestigenden werkstückspezifischen Komponenten, automatisch ab (wie obenstehend erläutert), wobei die eigentliche Befestigung der werkstückspezifischen Komponenten am Träger der aufzubauenden Werkstückgreifeinrichtung manuell durch Personal erfolgt. Der Befestigung können sich weitere Arbeitsschritte, wie bspw. der Aufbau einer elektrischen Verkabelung und/oder einer Pneumatik- bzw. Vakuumverschlauchung, anschließen.

Das Anzeigen bzw. Vorgeben der exakten Positionen und Ausrichtungen der am Träger zu befestigenden werkstückspezifischen Komponenten erfolgt erfindungsgemäß mit Hilfe eines Mehrachsroboters, an dessen Roboterarm eine stabförmige oder tellerartige Zeigereinrichtung Der Träger, an dem die werkstückspezifischen Komponenten befestigt werden sollen, kann einteilig oder mehrteilig ausgebildet sein. Bei dem Träger kann es sich auch um eine aus mehreren Trägerrohren, Balken, Profilträgern und/oder dergleichen gebildete Rahmenstruktur handeln, wie eingangs erläutert. Eine mögliche Vorgehensweise beim Aufbau einer Werkstückgreifeinrichtung sieht vor, dass der, gegebenenfalls nach Konstruktionsvorgaben vorgefertigte bzw. vormontierte, Träger in einer definierten Raumlage und Ausrichtung gehalten wird, während mit Hilfe des Mehrachsroboters die Positionen und Ausrichtungen der daran zu befestigenden werkstückspezifischen Komponenten angezeigt werden, wozu der Steuerung des Mehrachsroboters die Raumlage und Ausrichtung des Trägers bekannt ist. Eine andere mögliche Vorgehensweise beim Aufbau sieht vor, dass der Träger nach Konstruktionsvorgaben entsprechend der mit Hilfe des Mehrachsroboters angezeigten Positionen und Ausrichtungen für die daran zu befestigenden werkstückspezifischen Komponenten aufgebaut wird. Auch Kombinationen beider Vorgehensweisen sind möglich. Nachdem eine Komponente verbaut wurde, kann per Steuerbefehl die Position der als nächstes zu verbauenden Komponente angezeigt werden, wobei sich der Mehrachsroboter weitgehend automatisch und kollisionsfrei in die nächste Position bewegt.

Die Erfindung ermöglicht den im Wesentlichen einbaufertigen Aufbau einer werkstückbezogenen Werkstückgreifeinrichtung abseits der Pressenstation bzw. Pressenstraße, in der nachfolgend die Werkstückgreifeinrichtung zur Bedienung wenigstens einer Presse verwendet werden soll. Der Aufbau kann ohne Pressenwerkzeug, das mit der aufzubauenden Werkstückgreifeinrichtung bedient werden soll, erfolgen. Der Aufbau kann vor allem aber auch ohne das Werkstück, das mit der aufzubauenden Werkstückgreifeinrichtung gegriffen werden soll, erfolgen. Die Erfindung ermöglicht damit den werkzeugfreien und werkstücklosen Aufbau (oder gegebenenfalls auch Umbau) einer werkstückbezogenen Werkstückgreifeinrichtung. Darin unterscheidet sich die Erfindung grundlegend zu der in der DE 10 2010 053 401 A1 beschriebenen Vorgehensweise, die zwingend ein Werkstück (Förmling) und eine Aufnahmevorrichtung für dieses Werkstück vorsieht. Bei diesem Werkstück handelt es sich häufig um einen aufwändig und teuer hergestellten Prototyp. Der im Rahmen der Erfindung verwendete Bewegungsautomat in Form eines Mehrachsroboters dient quasi als Ersatz für ein Werkstück, insbesondere Blechwerkstück oder dergleichen, und eine Aufnahme- bzw. Ablagevorrichtung zur Nachbildung der exakten Lage. Der Bewegungsautomat und dessen Steuereinrichtung bilden sozusagen virtuell das zu greifende Werkstück ab.

In vorteilhafter Weise ermöglicht die Erfindung den Aufbau einer werkstückbezogenen bzw. werkstückindividuellen Werkstückgreifeinrichtung unabhängig von der Pressenstation bzw. Pressenstraße und unabhängig vom Pressenwerkzeugaufbau. Mit dem Aufbau der Werkstückgreifeinrichtung kann jederzeit ohne Vorbedingungen begonnen werden, was zu einer Terminentzerrung führen kann. Die Aufbauzeit und die Integrationszeit in die Pressenstation bzw. Pressenstraße werden gegenüber den aus dem Stand der Technik bekannten Lösungen deutlich reduziert. Mit der Erfindung gehen sowohl logistische und zeitliche Vorteile als auch erhebliche Material-, Platz- bzw. Raum- und Kostenvorteile einher. Daraus ergeben sich auch positive Effekte für den Pressenwerkzeugbau.

In einer Variante die nicht von den Ansprüchen umfasst wird können mit Hilfe des Bewegungsautomaten die am Träger zu befestigenden werkstückspezifischen Komponenten einzeln in ihre exakte Position und Ausrichtung bewegt werden. Die als nächstes zu verbauende werkstückspezifische Komponente wird also mit Hilfe des Bewegungsautomaten in der als nächstes angefahrenen Position bereitgestellt. Am Bewegungsautomaten kann hierzu ein geeigneter Halter (bspw. Greifhalter, Saughalter oder dergleichen) angebunden sein (bspw. am Roboterarm), mit dem die als nächstes zu befestigende Komponente insbesondere derart aufgenommen und gehalten werden kann, dass diese ohne Absetzen oder Umsetzen direkt am Träger der aufzubauenden Werkstückgreifeinrichtung befestigt und hierbei insbesondere auch ausgerichtet und justiert werden kann. Nachdem eine Komponente verbaut wurde, kann per Steuerbefehl die nächste Position angefahren werden, wobei bevorzugt vorgesehen ist, dass der Bewegungsautomat die als nächstes zu verbauende Komponente aufnimmt und insbesondere selbstständig aufnimmt (bspw. aus einer Bereitstellung) und in die richtige Verbauposition und -ausrichtung bewegt.

Die Positions- und Ausrichtungsdaten für die am Träger der aufzubauenden Werkstückgreifeinrichtung zu befestigenden werkstückspezifischen Komponenten werden erfindungsgemäß automatisiert aus einem CAD-Datensatz für das mit der aufzubauenden Werkstückgreifeinrichtung zu greifende Werkstück ermittelt bzw. aus diesen CAD-Daten abgeleitet werden. Damit können die in der Regel ohnehin vorhandenen CAD-Daten des zu greifenden Werkstücks, die bspw. für den Pressenwerkzeugaufbau erforderlich sind, und/oder gegebenenfalls auch die Daten zu dessen genauen Positionierung und Ausrichtung im zu bedienenden Pressenwerkzeug (oder dergleichen) zur Steuerung des Bewegungsautomaten genutzt werden. Die Anordnung der werkzeugspezifischen Komponenten bezüglich des zu greifenden Werkstücks kann automatisiert oder manuell vorgegeben werden. Das Erzeugen der Steuerdaten für den Bewegungsautomaten aus den CAD-Daten des zu greifenden Werkstücks, oder gegebenenfalls auch aus den CAD-Daten des zu bedienenden Pressenwerkzeugs, kann automatisiert mit Hilfe einer geeigneten Software erfolgen. Bevorzugt wird automatisiert eine ideale Abfolge bzw. Reihenfolge zum Befestigen aller werkstückspezifischen Komponenten am Träger ermittelt und ausgeführt. Eine ideale Abfolge kann sich bspw. aus einer geforderten Zugänglichkeit für den Bewegungsautomaten und/oder für das Personal ergeben, wobei auch ergonomische Gesichtspunkte für das Personal berücksichtigt werden können. Ferner kann automatisiert eine zum Befestigen aller werkstückspezifischen Komponenten am Träger optimierte und insbesondere optimale Raumlage für den Träger ermittelt werden, die bei den automatisch ausgeführten Bewegungen des Bewegungsautomaten entsprechend berücksichtigt wird. Die optimale Raumlage kann sich bspw. aus einer geforderten Zugänglichkeit für den Bewegungsautomaten und/oder für das Personal ergeben, wobei auch ergonomische Gesichtspunkte für das Personal berücksichtigt werden können.

Die Erfindung wird nachfolgend anhand einer Figur näher erläutert. Die in der Figur gezeigten und/oder die nachfolgend erläuterten Merkmale können, auch losgelöst von konkreten Merkmalskombinationen, allgemeine Merkmale der Erfindung sein.

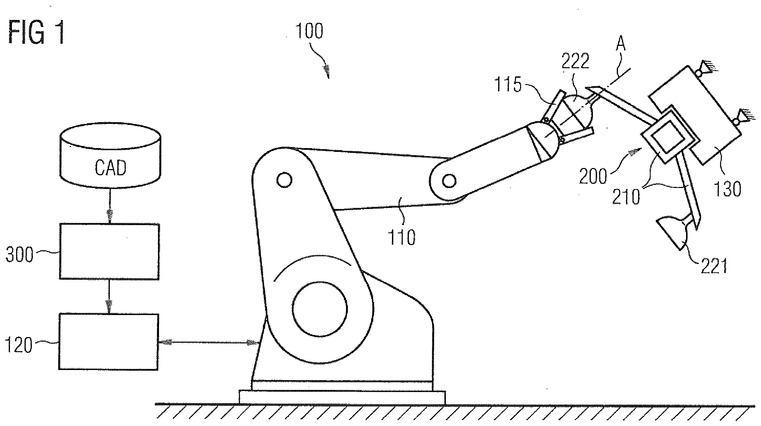

- Fig. 1: zeigt schematisch eine Vorrichtung zur Durchführung des erfindungsgemäßen Verfahrens.

Die in Fig. 1 gezeigte Vorrichtung 100 zum Aufbau einer werkstückbezogenen Werkstückgreifeinrichtung 200 für die Pressenautomatisierung umfasst einen Bewegungsautomaten in Gestalt eines Gelenkarm-Industrieroboters 110 und eine veränderbare bzw. einstellbare Halte- bzw. Spanneinrichtung 130, mit der der Träger 210 der aufzubauenden Werkstückgreifeinrichtung 200 in einer gegenüber dem Roboter 110 definierten Position und Raumlage gehalten werden kann. Bei der von dem Träger 210 eingenommenen Raumlage handelt es sich um eine optimierte Raumlage, wie obenstehend erläutert.

In einer Variante die nicht von den Ansprüchen umfasst wird werden mit Hilfe des Roboters 110 die am Träger 210 zu befestigenden werkstückspezifischen Komponenten einzeln in ihre exakte Position und Ausrichtung bewegt und können dann von einem Mitarbeiter manuell am Träger 210 befestigt werden. Bei diesen werkstückspezifischen Komponenten handelt es sich bspw. um Vakuumsauger (Sauggreifer), Pneumatikspanner, Magnetgreifer, Schaufel- oder Gabelheber (Untergreifheber), Sensoren (bspw. zur Erfassung einer Werkstückaufnahme) und/oder dergleichen.

In der Variante die nicht von den Ansprüchen umfasst wird werden die werkstückspezifischen Komponenten einzeln in einer vorab ermittelten idealen Abfolge am mehrteiligen Träger 210 befestigt. Nachdem im dargestellten Beispiel der untere Vakuumsauger 221 positions- und ausrichtungsgenau am Träger 210 befestigt wurde, verfährt der Roboter 110 auf Knopfdruck zur nächsten Position und nimmt unterwegs den als nächstes zu verbauenden Vakuumsauger 222 (oder eine andere als nächstes zu verbauende Komponente) auf und bewegt diese automatisch in die richtige Verbauposition und -lage (wie dargestellt). Hierzu ist am Roboterarm des Roboters 110 ein Halter 115 angeordnet, der ein direktes Befestigen der gehaltenen Komponente 222 am Träger 210 ohne Absetzen oder Umsetzen ermöglicht. Die Ausrichtung der zu befestigenden Komponente 222 ist durch die strichpunktierte Linie A veranschaulicht. In analoger Weise können am Träger 210 weitere werkstückspezifische Komponenten mit exakter Position und Ausrichtung befestigt werden.

Erfindungsgemäß wird vorgesehen, dass mit Hilfe des Roboters 110 nur die exakten Positionen und Ausrichtungen der am Träger 210 zu befestigenden werkstückspezifischen Komponenten angezeigt werden, wobei die jeweilige Komponente dann manuell montiert und ausgerichtet wird. Der Roboter 110 fungiert hierbei quasi als Schablone.

Bei dem mit der gezeigten aufzubauenden Werkstückgreifeinrichtung 200 zu greifenden Werkstück handelt es sich insbesondere um ein Blechwerkstück oder ein blechartiges Werkstück, wie obenstehend erläutert.

Mit Hilfe der Computereinrichtung 300 können automatisiert Steuerdaten für den Roboter 110 aus den CAD-Daten des mit der aufzubauenden Werkstückgreifeinrichtung 200 zu greifenden Werkstücks (oder gegebenenfalls mehrerer zu greifender Werkstücke) erzeugt werden. Alternativ oder ergänzend können auch CAD-Daten eines Pressenwerkzeugs, das mit der aufzubauenden Werkstückgreifeinrichtung 200 bedient werden soll, herangezogen werden. Dies erfolgt insbesondere mit Hilfe einer geeigneten Software. Die von der Computereinrichtung 300 automatisiert erzeugten Steuerdaten werden an die Steuereinrichtung 120 des Roboters 110 übergeben, die hieraus Steuerbefehle generiert und eine entsprechende Steuerung des Roboters 110 vornimmt.

### Bezugszeichenliste

- 100: Vorrichtung
- 110: Roboter (Bewegungsautomat)
- 115: Halter (Geber)
- 120: Steuereinrichtung
- 130: Halteeinrichtung
- 200: Werkstückgreifeinrichtung
- 210: Träger
- 221: werkstückspezifische Komponente (Vakuumsauger)
- 222: werkstückspezifische Komponente (Vakuumsauger)
- 300: Computereinrichtung
- A: Ausrichtung
- CAD: CAD-Daten

## Patentansprüche

1. Verfahren zum Aufbau einer werkstückbezogenen Werkstückgreifeinrichtung (200) für die Pressenautomatisierung, wobei werkstückspezifische Komponenten (221, 222) für ein mit der Werkstückgreifeinrichtung (200) zu greifendes Werkstück an einem Träger (210) befestigt werden,
**dadurch gekennzeichnet, dass**
die exakten Positionen und Ausrichtungen (A) der am Träger (210) zu befestigenden werkstückspezifischen Komponenten (221, 222) mit Hilfe eines Mehrachsroboters (110), an dessen Roboterarm eine stabförmige oder tellerartige Zeigereinrichtung angebunden ist, angezeigt werden,
wobei die Positions- und Ausrichtungsdaten für die werkstückspezifischen Komponenten (221, 222) automatisiert aus einem CAD-Datensatz (CAD) für das mit der Werkstückgreifeinrichtung (200) zu greifende Werkstück ermittelt und automatisch durch selbsttätige Stellbewegungen des Mehrachsroboters (110) angezeigt werden,
woraufhin die jeweilige werkstückspezifische Komponente (221, 222) dann manuell am Träger (210) montiert und ausgerichtet wird.

2. Verfahren nach Anspruch 1,
**dadurch gekennzeichnet, dass**
automatisiert eine ideale Abfolge zum Befestigen aller werkstückspezifischen Komponenten (221, 222) am Träger (210) ermittelt und ausgeführt wird.

3. Verfahren nach einem der vorausgehenden Ansprüche,
**dadurch gekennzeichnet, dass**
automatisiert eine zum Befestigen aller werkstückspezifischen Komponenten (221, 222) am Träger (210) optimale Raumlage für den Träger (210) ermittelt wird, die bei den Bewegungen des Mehrachsroboters (110) entsprechend berücksichtigt wird.

4. Verfahren nach einem der vorausgehenden Ansprüche,
**dadurch gekennzeichnet, dass**
die Positions- und Ausrichtungsdaten für die werkstückspezifischen Komponenten (221, 222) automatisiert aus einem CAD-Datensatz (CAD) für das mit der Werkstückgreifeinrichtung (200) zu greifende Werkstück ermittelt werden und dabei auch Daten zur genauen Positionierung und Ausrichtung (A) des zu greifenden Werkstücks in einem mit der Werkstückgreifeinrichtung (200) zu bedienenden Pressenwerkzeug genutzt werden.

## Claims

1. Method for construction of a workpiece-related workpiece gripping device (200) for press automation, workpiece-specific components (221, 222) for a workpiece to be gripped by the workpiece gripping device (200) being fastened on a support (210),
**characterized in that**
the exact positions and orientations (A) of the workpiece-specific components (221, 222) to be fastened on the support (210) are indicated by means of a multi-axis robot (110), to the robot arm of which a rod-shaped or plate-shaped pointer device is attached,
wherein the position and orientation data for the workpiece-specific components (221, 222) are determined in an automated manner from a CAD data set (CAD) for the workpiece to be gripped by the workpiece gripping device (200) and are automatically indicated by automatic adjusting movements of the multi-axis robot (110),
whereupon the respective workpiece-specific component (221, 222) is then manually mounted on the support (210) and oriented.

2. Method according to Claim 1,
**characterized in that**
an ideal sequence for fastening all of the workpiece-specific components (221, 222) on the support (210) is determined and performed in an automated manner.

3. Method according to one of the preceding claims, **characterized in that**
a spatial position for the support (210) that is optimal for fastening all of the workpiece-specific components (221, 222) on the support (210) is determined and is appropriately taken into account in the movements of the multi-axis robot (110).

4. Method according to one of the preceding claims, **characterized in that**
the position and orientation data for the workpiece-specific components (221, 222) are determined in an automated manner from a CAD data set (CAD) for the workpiece to be gripped by the workpiece gripping device (200) and data for the exact positioning and orientation (A) of the workpiece to be gripped in a press tool to be operated with the workpiece gripping device (200) are also used thereby.

## Revendications

1. Procédé de construction d'un dispositif de préhension de pièce (200) spécifique à une pièce, destiné à l'automatisation d'une presse, dans lequel des composants spécifiques à une pièce (221, 222) pour une pièce à saisir par le dispositif de préhension de pièce (200) sont fixés à un support (210),
**caractérisé en ce que** les positions et orientations exactes (A) des composants spécifiques à une pièce (221, 222) à fixer au support (210) sont indiquées à l'aide d'un robot multiaxial (110) au bras de robot duquel est rattaché un dispositif d'indication en forme de tige ou de disque,
les données de position et d'orientation pour les composants spécifiques à une pièce (221, 222) étant déterminées de manière automatisée à partir d'un ensemble de données de CAO (CAD) pour la pièce à saisir par le dispositif de préhension de pièce (200) et étant indiquées automatiquement par des mouvements de réglage autonomes du robot multiaxial (110),
après quoi le composant spécifique à une pièce (221, 222) respectif est ensuite monté ou orienté manuellement au niveau du support (210).

2. Procédé selon la revendication 1, **caractérisé en ce qu'**une séquence idéale pour la fixation au support (210) de tous les composants spécifiques à une pièce (221, 222) est déterminée et exécutée de manière automatisée.

3. Procédé selon l'une quelconque des revendications précédentes, **caractérisé en ce qu'**une position spatiale optimale pour le support (210) pour la fixation de tous les composants spécifiques à une pièce (221, 222) au support (210) est déterminée de manière automatisée et est prise en compte de façon adéquate lors des mouvements du robot multiaxial (110).

4. Procédé selon l'une quelconque des revendications précédentes, **caractérisé en ce que** les données de position et d'orientation pour les composants spécifiques à une pièce (221, 222) sont déterminées de manière automatisée à partir d'un ensemble de données de CAO (CAD) pour la pièce à saisir par le dispositif de préhension de pièce (200), et des données pour le positionnement et l'orientation (A) précis(e) de la pièce à saisir étant alors également utilisées dans un outil de presse à commander par le dispositif de préhension de pièce (200).
